(19) Europäisches Patentamt

European Patent Office

Office européen des brevets

(11) **EP 1 669 886 A1**

(12) **DEMANDE DE BREVET EUROPEEN**

(43) Date de publication:
14.06.2006 Bulletin 2006/24

(51) Int Cl.:
*G06F 17/27* (2006.01)

(21) Numéro de dépôt: 05292593.0

(22) Date de dépôt: 06.12.2005

(84) Etats contractants désignés:
AT BE BG CH CY CZ DE DK EE ES FI FR GB GR
HU IE IS IT LI LT LU LV MC NL PL PT RO SE SI
SK TR
Etats d'extension désignés:
AL BA HR MK YU

(30) Priorité: 08.12.2004 FR 0413100
08.12.2004 FR 0413101

(71) Demandeur: FRANCE TELECOM
75015 Paris (FR)

(72) Inventeur: Lasalle, Edmond
22300 Lannion (FR)

(74) Mandataire: Cabinet Martinet & Lapoux
43, boulevard Vauban,
B.P. 405 Guyancourt
78055 St. Quentin Yvelines Cédex (FR)

(54) **Construction d'un automate compilant des règles de transcription graphème/phonème pour un phonétiseur**

(57) Un système informatique vérifie l'exactitude d'une chaîne graphique requise, par exemple des fautes d'usage. Des modules (MCA, MCP) construisent un phonétiseur par construction d'un automate (AU) compilant des règles de transcription et par détermination de probabilités de transitions entre des correspondances graphème/phonème. Un dictionnaire de signatures phonétiques (DSP) est construit en transcrivant les chaînes graphiques d'un dictionnaire de chaînes graphiques (DG) en des signatures phonétiques et en les reliant aux chaînes graphiques et détermine des probabilités des transcriptions des chaînes graphiques en les signatures. Une transcription de la chaîne graphique requise est déterminée en une signature de requête et une probabilité de la transcription précédente est déterminée. Dans le dictionnaire des de signatures, des signatures sont recherchées sensiblement identiques à ladite signature de requête pour déduire des chaînes graphiques attestées mémorisées dans le dictionnaire de chaînes graphiques.

FIG. 1

**Description**

La présente invention concerne le traitement automatique de l'écrit, au moyen d'un système vérificateur de faute dans une langue prédéterminée. Plus particulièrement, elle a trait à la construction informatique d'un automate compilant des règles de transcription graphème/phonème pour le traitement automatique de la transcription graphème/phonème dans une langue prédéterminée, à la construction informatique d'un phonétiseur à intégrer dans un système vérificateur de faute d'usage souvent inclus dans un correcteur orthographique, et au fonctionnement dudit système vérificateur.

Il est connu que la nature concaténative de la transcription graphème/phonème utilise un système de transcription comportant un automate à états finis pour effectuer le traitement automatique de la transcription.

L'automate du système de transcription est construit jusqu'à présent selon les étapes suivantes. Une première étape définit un langage de description de l'automate. Il s'agit d'un cadre formel décrivant des règles de transcription en présentant à la fois la manière de coder chaque règle ainsi que la manière dont chaque règle sera traduite au niveau de l'automate. Le langage de description est obtenu, par exemple, par une approche séquentielle dans laquelle la procédure de transcription analyse une chaîne graphique et applique les règles, l'une après l'autre. Chaque interprétation donne lieu à une transformation locale de la chaîne graphique analysée en une nouvelle chaîne, qui est à son tour analysée à l'étape suivante de transcription. L'approche séquentielle est exécutée par un passage progressif de la chaîne graphique à une chaîne phonétique avec des représentations mixtes comprenant des graphèmes et des phonèmes pendant des étapes intermédiaires de détermination de règle phonologique. Ce passage progressif est représenté par une mise en cascade de plusieurs automates élémentaires chacun englobant un paquet de règles de transcription phonétique reflétant un phénomène de transcription linguistique observé. Les automates en cascade peuvent être utilisés tels quels dans une structure d'analyse en cascade comme suit :

- le graphème est pris en entrée par le premier automate qui produit en sortie une représentation mixte comprenant des graphèmes et des phonèmes dans une même chaîne,
- la représentation ainsi produite est prise en entrée par le deuxième automate, lequel produit à son tour une nouvelle représentation, et
- cette nouvelle représentation devient l'entrée de l'automate suivant et ainsi de suite jusqu'au dernier automate qui va sortir le résultat final.

La mise en cascade d'automates est informatiquement exploitable pour des modèles déterministes où un résultat unique est produit en sortie. Pour des modèles non déterministes, typiquement quand on admet plusieurs prononciations possibles pour un même graphème, l'analyse en cascade, en général, n'est pas viable car chaque sortie d'automates produit pour l'automate suivant plusieurs entrées à analyser, ce qui conduit à une explosion des résultats à la sortie, sans compter la difficulté d'interclasser les solutions en sortie. Dans le cas de modèles non déterministes, une solution serait de combiner les automates élémentaires en un unique automate comportant un très grand nombre d'états, ce qui implique de prévoir un espace mémoire considérable pour l'automate.

Une deuxième étape de construction de l'automate fait intervenir un expert humain qui doit :

- comprendre le langage de description des règles définies précédemment,
- connaître la nature des phénomènes de transcription à observer,
- observer un corpus de transcription, généraliser les phénomènes observés et les traduire par la suite en règles de transcription dans le cadre formel défini par le langage de description, et
- procéder par la suite à une révision ou à une mise à jour des règles déjà décrites.

Une troisième étape de construction de l'automate du système de transcription consiste à implémenter un module informatique d'interprétation des règles décrites par l'expert humain. Une alternative à l'interprétation des règles consiste à mettre en oeuvre un module de traduction des règles en un programme exécutable ou éventuellement interprétable sous forme de table d'analyse, comportant, par exemple, une fonction pour chaque règle de transcription. Cette seconde option correspondant à la compilation des règles s'avère difficilement réalisable du fait de la nature complexe du langage de description des règles.

Les règles de transcription phonétique sont généralement exprimées de manière naturelle sous forme de règles contextuelles. Par exemple, en français, dans la transcription de "an", la forme phonétique correspondante est "an" si "an" est suivi d'une consonne, par exemple comme dans "candidat", et est retranscrite en "a~" si "an" est suivi d'une voyelle, par exemple comme dans "plane". La difficulté du système de transcription réside à la fois dans la manière de traduire automatiquement les règles de transcription en un automate sans recourir à un expert humain et dans la manière de décrire lesdites règles de transcription. Les défauts identifiés de ce type de système de transcription sont les suivants :

- difficulté de maintenir des règles qui ont été construites à la main ; en effet, en ajoutant une règle pour étendre la couverture du phénomène traité, les résultats régressent fréquemment ;
- l'écriture des règles reste proche de la programmation et une personne autre que leur auteur a souvent des difficultés à faire évoluer les règles déjà écrites ;
- l'extension de la langue prédéterminée à des caractéristiques régionales nécessite une réécriture quasi-complète des règles ;
- le codage des caractères influence sur l'écriture des règles : les règles de transcription n'étant pas les mêmes en français suivant que l'on utilise des caractères accentués ou des caractères non accentués.

Actuellement, on distingue parmi les systèmes vérificateurs opérationnels ceux qui vérifient des fautes lexicales ou d'usage en traitant l'écriture inexacte de mots, et ceux qui vérifient des fautes de syntaxe, portant sur l'articulation de phrases, ou plus rarement ceux qui vérifient le sens de phrases. L'invention s'intéresse aux fautes lexicales rencontrées qui sont traditionnellement de deux types

- les fautes typographiques liées à l'usage d'un clavier pour saisir le texte, comme le défaut d'accentuation de certains éléments graphiques (caractères) ; et
- les fautes d'usage dues à la méconnaissance de l'orthographe exacte de chaînes graphiques (mots).

Les systèmes vérificateurs de faute d'usage ont pour hypothèse de travail le comportement de l'utilisateur saisissant le texte. Celui-ci en cas de méconnaissance de l'orthographe exacte a tendance à écrire la chaîne graphique comme il la prononcerait. La vérification consiste donc à déterminer une chaîne phonétique constituant une signature phonétique de la chaîne graphique à vérifier et corriger, puis à extraire la signature correspondante d'un dictionnaire de signatures phonétiques, et enfin à déterminer la ou les chaînes graphiques associées à la signature correspondante.

Pour déterminer une signature phonétique plus fine, un système vérificateur comporte un phonétiseur déterminant la transcription d'une chaîne graphique en une chaîne phonétique constituant une signature phonétique. Le phonétiseur est basé sur des règles de transcription phonétique, chaque règle traduisant un phénomène linguistique observé. Les règles de transcription phonétiques sont exprimées de manière naturelle sous forme de règles contextuelles dépendant de l'entourage immédiat de la chaîne graphique.

Les systèmes de correction ont les défauts suivants :

- difficulté de maintenir les règles qui ont été construites à la main ; en effet, en ajoutant une règle pour étendre la couverture du phénomène traité, les résultats régressent fréquemment ;
- l'écriture des règles reste proche de la programmation et une personne autre que l'auteur des règles a souvent des difficultés à faire évoluer les règles déjà écrites ;
- les modèles de phonétiseur, la plupart déterministes, ne peuvent prendre en compte les variantes de prononciation d'une même chaîne graphique ;
- l'extension de la langue prédéterminée à des caractéristiques régionales nécessite une réécriture quasi-complète des règles ; et
- le codage des éléments graphiques, par exemple l'accentuation ou non de ceux-ci, influence sur l'écriture des règles de transcription.

L'invention vise à s'affranchir des inconvénients ci-dessus et ainsi à automatiser la construction et la compilation de règles de transcription phonologique. Ainsi, dans un processus de transcription que l'on souhaite non supervisé par un expert humain, les règles doivent être produites par une simple analyse d'un corpus de transcription initial. La construction d'un automate compilant les règles de transcription phonologique et la construction d'un phonétiseur fondé sur l'automate sont automatisées et le phonétiseur est ensuite intégré dans un système vérificateur de faute d'usage.

A cette fin, l'invention a pour objet un procédé pour construire informatiquement un automate compilant des règles de transcription graphème/phonème à partir d'un corpus de transcription initial comprenant des couples composés chacun d'une chaîne graphique incluant des éléments graphiques et d'une chaîne phonétique incluant des éléments phonétiques. Le procédé de construction d'automate est caractérisé en ce qu'il comprend les étapes suivantes, après un enregistrement de correspondances graphème/phonème dans une base de données par alignement des éléments graphiques des chaînes graphiques avec les éléments phonétiques des chaînes phonétiques associées aux chaînes graphiques

recensement et enregistrement dans la base des règles de transcription à partir d'une analyse de correspondances gauche et droite de chaque correspondance graphème/phonème dans chaque couple de chaînes graphique et phonétique associées, et

construction et enregistrement sous la forme d'un fichier dans la base dudit automate comportant des états et transitions d'état déduits des règles de transcription recensées, chaque état étant un lien entre deux correspondances graphème/phonème consécutives dans un couple de chaînes graphique et phonétique, et chaque transition chaînant deux états ayant en commun une correspondance.

L'automate selon l'invention est basé sur une approche parallèle de langage de description, différente de l'approche séquentielle connue, par l'utilisation d'états et de transitions induisant une chaîne phonétique produite distincte de la chaîne graphique analysée. La chaîne phonétique est construite progressivement et en même temps que l'analyse avance dans la chaîne graphique. Toutes les règles de transcription sont reconnues simultanément comme un ensemble de contraintes qu'il faut satisfaire à chaque étape de transcription de graphème en phonème.

L'automate est construit directement à partir de l'analyse d'un corpus de transcription initial, une évolution de l'automate consiste à modifier le corpus de transcription initial tout simplement. Les méthodes d'apprentissage utilisées permettent en outre de traiter toutes langues ou variantes de langue utilisant un alphabet comme système d'écriture. En effet, pour disposer d'un autre automate traitant une autre langue, il suffit de disposer d'un corpus de transcription graphème/phonème initial relatif à la langue à traiter.

Selon une caractéristique de l'invention, la construction de l'automate comprend une création et une numérotation des états en fonction des règles de transcription recensées et un chaînage des états entre eux par des transitions dépendant de correspondances communes aux états.

Selon une autre caractéristique de l'invention, la construction de l'automate comprend une création d'états initial et final représentatifs respectivement d'états de début et de fin de l'automate.

L'invention concerne également un système informatique de construction d'automate pour la mise en oeuvre du procédé de l'invention comportant une base de données dans laquelle est mémorisé un corpus de transcription initial comprenant des couples composés chacun d'une chaîne graphique incluant des éléments graphiques et d'une chaîne phonétique incluant des éléments phonétiques, caractérisé en ce qu'il comprend :

un module pour recenser et enregistrer dans la base des règles de transcription à partir d'une analyse de correspondances gauche et droite de chaque correspondance graphème/phonème dans chaque couple de chaînes graphique et phonétique, toutes les correspondances étant déterminées par un module d'alignement alignant des éléments graphiques des chaînes graphiques aux éléments phonétiques des chaînes phonétiques en des correspondances graphème/phonème enregistrées dans la base de données, et
un module pour construire et enregistrer sous la forme d'un fichier dans la base ledit automate comportant des états et transitions d'état déduits des règles de transcription recensées, chaque état étant un lien entre deux correspondances graphème/phonème consécutives dans un couple de chaînes graphique et phonétique, et chaque transition chaînant deux états ayant en commun une correspondance.

L'invention concerne un premier programme d'ordinateur apte à être mis en oeuvre sur le système informatique de construction d'automate de l'invention. Le programme comprend des instructions de programme qui, lorsque le programme est chargé et exécuté sur le système informatique de construction d'automate, réalisent les étapes du procédé de construction d'automate de l'invention.

L'invention concerne également un procédé de construction de phonétiseur pour construire informatiquement un phonétiseur à partir d'un corpus enregistré dans une base de données et comprenant des couples composés chacun d'une chaîne graphique incluant des éléments graphiques et d'une chaîne phonétique incluant des éléments phonétiques Le procédé de construction de phonétiseur est caractérisé en ce qu'il comprend les étapes suivantes

construction informatique et enregistrement dans la base, d'un automate compilant des règles de transcription résultant d'une analyse de correspondances graphème/phonème dans les couples de chaînes lus dans le corpus, ledit automate comportant des états et transitions d'état déduits des règles de transcription, chaque état étant un lien entre deux correspondances graphème/phonème consécutives dans un couple de chaînes graphique et phonétique, et chaque transition chaînant deux états ayant en commun une correspondance graphème/phonème, les transitions relatives à la transcription d'une chaîne graphique en une chaîne phonétique formant un chemin de transitions dans l'automate, et
détermination et enregistrement dans la base, de probabilités des transitions en sortie de noeuds de l'automate situant les correspondances graphème/phonème communes aux transitions, afin de construire le phonétiseur en combinant l'automate et les probabilités de transitions déterminées.

Le phonétiseur de l'invention est stochastique et donc non déterministe puisqu'il transcrit une chaîne graphique en une ou plusieurs chaînes phonétiques, dites signatures phonétiques, en dépendance de prononciations multiples. Le phonétiseur est construit automatiquement à partir d'une analyse du corpus, et peut être amélioré par enrichissement du corpus notamment lors de l'évolution de la langue du corpus.

Puisque le phonétiseur est fondé sur un corpus, l'invention peut construire plusieurs phonétiseurs à l'aide de plusieurs corpus compatibles respectivement avec différentes langues.

L'étape de détermination de probabilités de transitions peut comprendre les sous-étapes suivantes :

pondération de chaque transition de l'automate par une probabilité de transition choisie arbitrairement,
détermination de probabilité d'au moins un chemin de transitions représentatif de la transcription de chaque chaîne graphique en au moins une chaîne phonétique associée en fonction des probabilités des transitions du chemin,
sélection pour chaque chaîne graphique du chemin de transitions ayant la plus grande probabilité,
incrémentation de variables respectivement associées aux transitions et représentatives de nombres de traversées des transitions par les chemins de transitions sélectionnés, et
estimation de nouvelles probabilités de transition en fonction des variables de transition précédemment déterminées.

L'étape de détermination de probabilités de transitions peut comprendre en outre une réitération des étapes de détermination de probabilité de chemin, sélection, incrémentation et estimation en fonction des nouvelles probabilités de transition jusqu'à une sensible convergence desdites probabilités de transition afin de combiner l'automate et les probabilités de transition en le phonétiseur.

L'invention est relative également à un système informatique de construction d'un phonétiseur. Ce système est caractérisé en ce qu'il comprend :

un module pour construire informatiquement et enregistrer dans la base, un automate compilant des règles de transcription résultant d'une analyse de correspondances graphème/phonème dans les couples de chaînes lus dans le corpus, ledit automate comportant des états et transitions d'état déduits des règles de transcription, chaque état étant un lien entre deux correspondances graphème/phonème consécutives dans un couple de chaînes graphique et phonétique, et chaque transition chaînant deux états ayant en commun une correspondance graphème/phonème, les transitions relatives à la transcription d'une chaîne graphique en une chaîne phonétique formant un chemin de transitions dans l'automate, et
un module pour déterminer et enregistrer dans la base, des probabilités des transitions en sortie de noeuds de l'automate situant les correspondances graphème/phonème communes aux transitions, afin de construire le phonétiseur en combinant l'automate et les probabilités de transitions déterminées.

L'invention concerne encore un deuxième programme d'ordinateur apte à être mis en oeuvre sur le système informatique de construction de phonétiseur selon l'invention. Le deuxième programme comprend des instructions de programme qui, lorsque le programme est chargé et exécuté sur le système informatique de construction de phonétiseur, réalisent les étapes du procédé de construction de phonétiseur selon l'invention.

L'invention concerne également une utilisation du phonétiseur construit selon l'invention. A cette fin, un procédé informatique pour vérifier l'exactitude d'une chaîne graphique requise au moyen d'un phonétiseur et d'un dictionnaire informatique de chaînes graphiques, est caractérisé en ce que le procédé comprend les étapes suivantes :

construction du phonétiseur par construction informatique d'un automate compilant des règles de transcription résultant d'une analyse de correspondances graphème/phonème dans des couples de chaînes graphique et phonétique lus dans un corpus et par détermination de probabilités de transitions entre des correspondances graphème/phonème,
au moyen du phonétiseur, construction d'un dictionnaire informatique de signatures phonétiques en transcrivant chacune des chaînes graphiques du dictionnaire de chaînes graphiques en au moins une signature phonétique et en reliant informatiquement les signatures phonétiques aux chaînes graphiques, et détermination de probabilités des transcriptions des chaînes graphiques en les signatures phonétiques,
au moyen du phonétiseur, détermination d'une transcription de la chaîne graphique requise en au moins une signature phonétique de requête et détermination d'une probabilité de la transcription précédente, et
recherche de signatures phonétiques dans le dictionnaire de signatures phonétiques sensiblement identiques à ladite au moins une signature phonétique de requête pour en déduire des chaînes graphiques attestées mémorisées dans le dictionnaire de chaînes graphiques et reliées à ladite au moins une signature phonétique.

L'invention est relative encore à un système informatique de vérification de l'exactitude d'une chaîne graphique requise. Ce système comprend un phonétiseur et un dictionnaire informatique de chaînes graphiques, et est caractérisé en ce qu'il comprend :

un moyen pour construire le phonétiseur par construction informatique d'un automate compilant des règles de transcription résultant d'une analyse de correspondances graphème/phonème dans des couples de chaînes graphique et phonétique lus dans un corpus et par détermination de probabilités de transitions entre des correspondances graphème/phonème,

un moyen à l'aide du phonétiseur pour construire un dictionnaire informatique de signatures phonétiques en transcrivant chacune des chaînes graphiques du dictionnaire de chaînes graphiques en au moins une signature phonétique et en reliant informatiquement les signatures phonétiques aux chaînes graphiques,

un moyen à l'aide du phonétiseur pour déterminer des probabilités des transcriptions des chaînes graphiques en les signatures phonétiques,

un moyen à l'aide du phonétiseur pour déterminer une transcription de la chaîne graphique requise en au moins une signature phonétique de requête,

un moyen pour déterminer une probabilité de la transcription précédente, et

un moyen pour rechercher des signatures phonétiques dans le dictionnaire de signatures phonétiques sensiblement identiques à ladite au moins une signature phonétique de requête pour en déduire des chaînes graphiques attestées mémorisées dans le dictionnaire de chaînes graphiques et reliées à ladite au moins une signature phonétique.

L'invention concerne encore un troisième programme d'ordinateur apte à être mis en oeuvre sur le système informatique de vérification d'exactitude de chaîne graphique selon l'invention. Le troisième programme comprend des instructions de programme qui, lorsque le troisième programme est chargé et exécuté sur le système informatique, réalisent les étapes du procédé de vérification d'exactitude de chaîne graphique selon l'invention.

Dans ce contexte, l'invention fournit aussi un phonétiseur pour transcrire une chaîne graphique requise en une signature phonétique, recourant à un dictionnaire informatique de chaînes graphiques. Le phonétiseur comprend le moyen pour construire un dictionnaire informatique de signatures phonétiques, le moyen pour déterminer des probabilités des transcriptions des chaînes graphiques, le moyen pour déterminer une transcription de la chaîne graphique requise et le moyen pour déterminer une probabilité de la transcription précédente.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :

-    la figure 1 est un bloc-diagramme schématique d'un système informatique selon l'invention ;
-    la figure 2 est un algorithme de construction informatique du phonétiseur de l'invention ;
-    la figure 3 est un algorithme de construction d'un automate compilant des règles de transcription;
-    la figure 4 est un diagramme schématique d'un chaînage des états de l'automate ;
-    la figure 5 est un algorithme d'un sous-procédé d'alignement du procédé de construction d'automate selon l'invention;
-    la figure 6 est un algorithme d'un sous-procédé de recensement de règles de transcription du procédé de construction d'automate selon l'invention ;
-    les figures 7 et 8 représentent un algorithme d'un sous-procédé de chaînage du procédé de construction d'automate selon l'invention ;
-    la figure 9 est un algorithme de construction d'un phonétiseur stochastique de l'invention ; et
-    la figure 10 est un algorithme de procédé de vérification de faute d'usage mis en oeuvre dans un système vérificateur de faute d'usage comportant le phonétiseur selon l'invention.

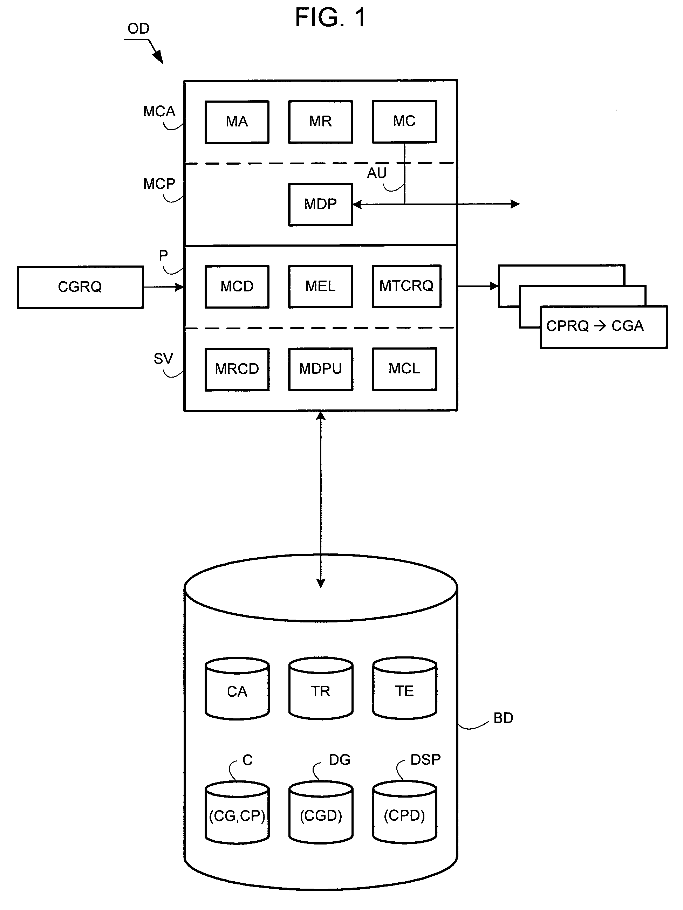

En référence à la figure 1, un **ordinateur** OD, ou un serveur, en tant que système informatique selon l'invention, construit un automate AU selon l'invention et un phonétiseur stochastique P de l'invention. Le système informatique selon l'invention assure également les fonctionnalités d'un système vérificateur de faute d'usage SV comportant ledit phonétiseur. Le système vérificateur SV détermine une ou des chaînes graphiques qui constituent des solutions attestées à une chaîne graphique requise erronée, voire inconnue, incluse dans une requête.

Après construction de l'automate AU, l'ordinateur envoie, par exemple, sous forme d'un fichier, des instructions et des données représentatives des fonctionnalités de l'automate AU à un analyseur implanté, par exemple, dans un serveur. L'analyseur transcrit des chaînes graphiques appliquées en entrée de l'analyseur en des chaînes phonétiques résultantes en sortie de l'analyseur, par exemple dans le cadre de correction orthographique au cours d'une recherche de patronyme dans un annuaire.

D'une manière similaire, après construction du phonétiseur, l'ordinateur OD peut compiler des instructions et des données représentatives du phonétiseur en un fichier et transmettre le fichier vers un autre système informatique.

L'ordinateur OD incorpore une base de données BD du type de celle utilisée en intelligence artificielle ou accède localement ou à travers un réseau de télécommunications à un serveur gérant la base de données. La base de données mémorise initialement un corpus informatique de transcription initial C et un dictionnaire informatique de chaînes graphiques DG sous forme de fichiers.

Le corpus C comporte des couples de chaînes graphique CG et phonétique CP, chaque chaîne graphique CG incluant des éléments graphiques $g_m$ et chaque chaîne phonétique CP incluant des éléments phonétiques $p_n$. Le dictionnaire de chaînes graphiques DG comporte des chaînes graphiques CGD, par exemple des noms patronymiques ou des mots d'un annuaire dans une langue prédéterminée. Un corpus d'alignement CA, une table de règle de transcription TR et une table d'états TE sont créés et mémorisés dans la base de données BD lors de l'exécution du procédé de construction de l'automate et de compilation des règles de transcription. Lors du fonctionnement du système vérificateur de faute d'usage, la base de données mémorise un dictionnaire de signatures phonétiques DSP comportant des chaînes phonétiques, dites signatures phonétiques CPD, produites à partir de la transcription des chaînes graphiques CGD du dictionnaire de chaînes graphiques DG.

L'ordinateur OD comporte un module MCA pour construire l'automate AU de l'invention. Le module MCA comprend un module d'alignement MA pour aligner en correspondance des graphèmes de chaînes graphiques et des phonèmes de chaînes phonétiques appartenant à un corpus de transcription initial C, un module de recensement MR pour recenser des règles de transcription, et un module de construction MC pour construire un automate à états finis AU pour compilant les règles de transcription R. L'ordinateur OD comporte également un module MCP pour construire le phonétiseur stochastique P de l'invention. Le module MCP coopère avec le module de construction d'automate MCA et comprend un module de détermination de probabilités de transcription MDP pour déterminer depuis l'automate AU, les probabilités de transcription d'une chaîne graphique en une ou plusieurs chaînes phonétiques.

L'ordinateur OD comporte également des modules du phonétiseur P après la construction de celui-ci, et des modules de fonctionnement du système vérificateur de faute d'usage SV.

Le phonétiseur P comprend :

- un module de construction MCD pour construire le dictionnaire de signatures phonétiques DSP à partir de la transcription des chaînes graphiques CGD du dictionnaire de chaînes graphiques DG par le phonétiseur stochastique P;
- un module d'établissement de liens MEL pour établir des liens entre les signatures phonétiques CPD du dictionnaire des signatures phonétiques DSP et les chaînes graphiques CGD correspondantes du dictionnaire de chaînes graphiques DG, une signature phonétique pouvant être liée à une ou plusieurs chaînes graphiques et inversement ; et
- un module de transcription stochastique MTCRQ pour transcrire une chaîne graphique requise CGRQ d'une requête en une ou plusieurs signatures phonétiques de requête CPRQ.

Le système vérificateur SV comprend :

- un module de recherche MRCD pour rechercher des signatures phonétiques CPD dans le dictionnaire de signatures phonétiques DSP en fonction des chaînes phonétiques CPRQ résultant de la transcription de la chaîne graphique requise CGRQ ;
- un module de détermination de probabilités d'usage MDPU pour déterminer des probabilités d'usage des chaînes graphiques attestées CGA associées aux signatures phonétiques CPRQ; et
- un module de classement MCL pour classer les chaînes graphiques attestées CGA selon leurs probabilités d'usage.

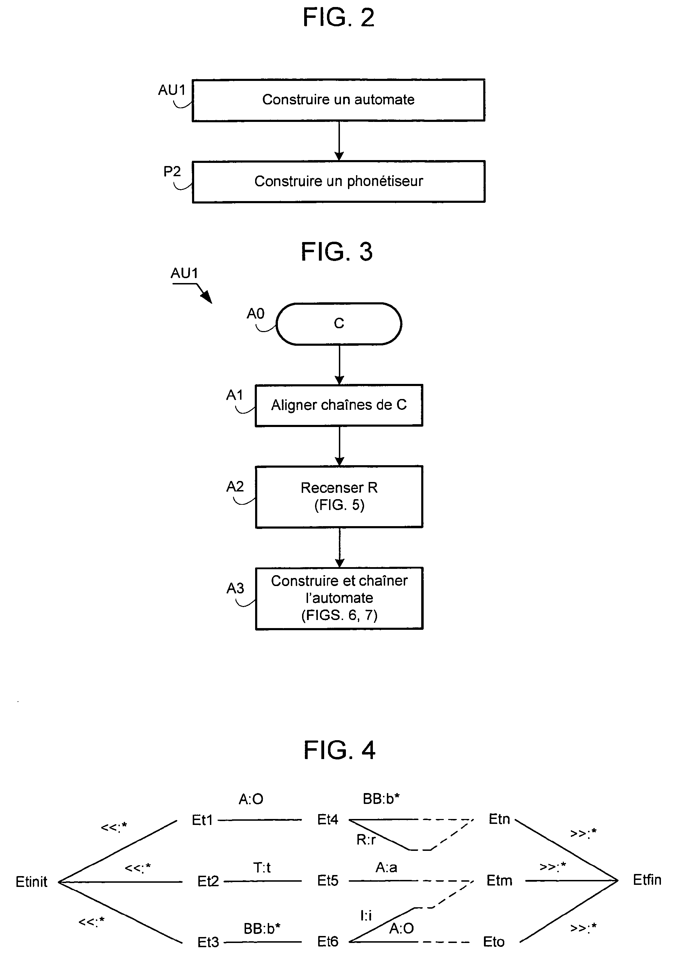

Comme montré à la figure 2, le **procédé de construction** de phonétiseur selon l'invention comprend des étapes principales AU1 et P2. Ces étapes sont mises en oeuvre sous la forme d'un programme implémenté dans l'ordinateur OD.

L'ordinateur OD dispose initialement du corpus graphème/phonème C dans la base de données BD pour décrire le phénomène de phonétisation à prendre en compte. Le module MCA de l'ordinateur OD analyse le corpus C et y extrait des couples de chaînes graphique et phonétique pour en déduire des règles de transcription compilées dans un automate AU de transcription, à l'étape A1. L'automate AU compilant des règles de transcription selon l'invention et construit informatiquement a pour rôle de reconnaître la validité d'une chaîne graphique CG pour avoir une transcription effective en chaîne phonétique CP. L'automate ainsi construit est non déterministe puisqu'une chaîne graphique donnée correspond à une ou plusieurs chaînes phonétiques possibles, dites signatures phonétiques. L'étape AU1 est détaillée lors de la description des figures 3 à 8.

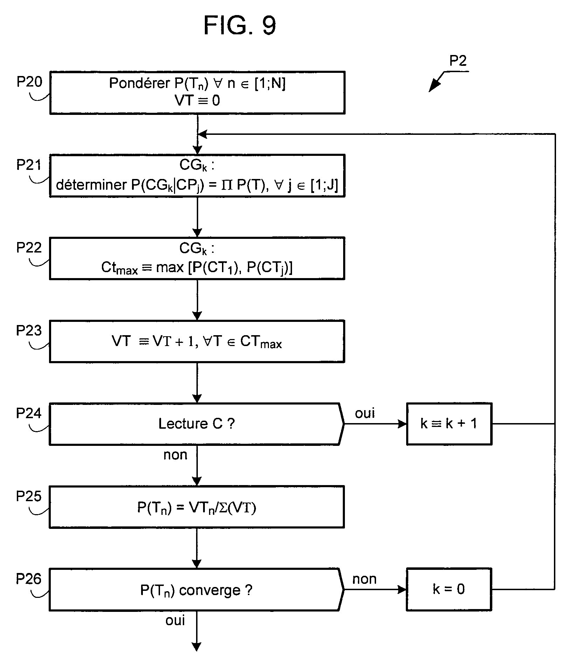

Le module MDP de l'ordinateur OD construit ensuite le phonétiseur à l'étape P2 en déterminant des probabilités de transitions à des noeuds de l'automate. L'étape P2 est détaillée lors de la description de la figure 9.

La figure 3 illustre l'**étape** de construction d'automate **AU1** comprenant des sous-étapes A0 à A3. Ces étapes sont pour la plupart mises en oeuvre sous la forme d'un programme implémenté dans l'ordinateur OD et pouvant être lié par exemple à un système de correction de fautes lexicales qui peut être intégré à un système de traitement de texte ou à un système d'exercice linguistique. Le corpus de transcription initial C dans la base de données BD inclut des transcriptions qui font correspondre des chaînes graphiques CG telles que des mots ou patronymes, composées chacune d'un ou plusieurs éléments typographiques (caractères), appelés ci-après éléments graphiques $g_m$, $g_a$, d'un alphabet $G = \{g_1, ..., g_A\}$ à A éléments de la langue prédéterminée, respectivement à des chaînes phonétiques CP composées chacune d'un ou plusieurs éléments phonétiques $p_n$, $p_b$ d'un alphabet $P = \{p_1, ..., p_B\}$ à B éléments phonétiques avec $A \neq B$ a priori. Par exemple un extrait d'un corpus C est le suivant lorsque la langue prédéterminée est l'anglais:

ABBREVIATE obriviat

ABBREVIATED obriviatod
ABBREVIATES obriviats
*ABBREVIATING obriviatiG*
*ABBREVIATION obriviaSon*
*ABBREVIATIONS obriviaSonz*
*ABBRUZZESE obrutsazi.*

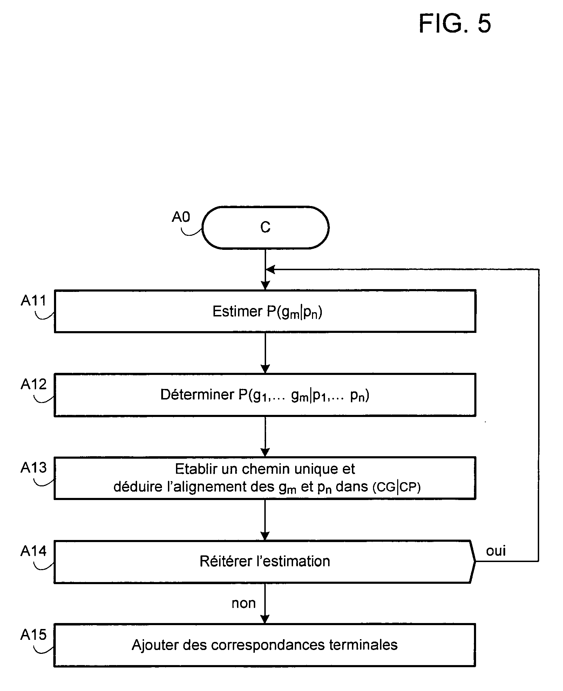

A la suite d'une lecture du corpus de transcription initial C à l'étape A0, le module d'alignement MA aligne à l'étape A1 par un processus de syllabation, des graphèmes et phonèmes de type $g_i:p_i$ des transcriptions élémentaires. La transcription élémentaire $g_i:p_i$ est une correspondance ou transduction entre un ou plusieurs éléments graphiques $g_m$ d'une chaîne graphique CG constituant un graphème $g_i$ et un ou plusieurs éléments phonétiques $p_n$ de la chaîne phonétique associée CP constituant un phonème $p_i$. L'étape d'alignement A1 est détaillée lors de la description de la figure 5.

En se référant à l'extrait cité précédemment du corpus C, le module MA fournit les correspondances suivantes à l'étape A1 :

« A BB R E V I A TE » * o b* r i v i a t* *

« A BB R E V I A T E D » * o b* r i v i a t o d *

« A BB R E V I A TE S » * o b* r i v i a t* s *

« A BB R E V I A T IN G» * o b* r i v i a t i* G*

« A BB R E V I A TI O N» * o b* r i v i a s* o n*

« A BB R E V I A T I O N S » * o b* r I v I a s* o n z *

« A BB R U Z Z E S E » * o b* r u t s a z I *

Dans chacun des couples de ligne ci-dessus représentatifs de transcriptions de chaînes, la ligne supérieure représente la chaîne graphique CG décomposée en M éléments graphiques $g_m$ et la ligne inférieure représente la chaîne phonétique CP associée décomposée en N éléments phonétiques $p_n$. Le symbole * désigne un élément phonétique muet et sans signification. Ces correspondances, ou transductions, graphème/phonème sont enregistrées dans la base de données BD pour constituer progressivement le corpus d'alignement CA. Les symboles graphiques « et » associés au symbole phonétique * indiquent des correspondances terminales marquant le début et respectivement la fin de chaque couple de chaînes graphique et phonétique.

A partir de cet alignement de graphème/phonème, le module de recensement MR de l'ordinateur OD recense des règles de transcription $R_i$, à l'étape A2. Une règle de transcription est représentée de la manière suivante :

$$g_i:p_i \Leftrightarrow g_{i-1}:p_{i-1}\_g_{i+1}:p_{i+1},$$

où $g_{i-1}:p_{i-1}$ est la correspondance gauche et $g_{i+1}:p_{i+1}$ est la correspondance droite de la correspondance $g_i:p_i$ dans la chaîne graphique CG = (...,$g_{i-1}$,$g_i$,$g_{i+1}$,...) et la chaîne phonétique associée CP = (...,$p_{i-1}$,$p_i$,$p_{i+1}$,...). La règle transcrit une correspondance d'un graphème $g_i$ en un phonème $p_i$ en fonction des contextes encadrant la correspondance. Le contexte gauche, respectivement droit, de la correspondance est constitué d'une ou de plusieurs correspondances situées à gauche, respectivement à droite, de ladite correspondance. Dans une variante de l'invention, une seule correspondance à gauche, respectivement à droite, suffit.

Par exemple dans l'alignement :

A BB R E V I A TE o b* r i v i a t*

le module MR déduit pour la correspondance BB:b, la règle suivante :
BB:b* $\Leftrightarrow$ A:o_R:r.

Cette règle signifie qu'il faut et il suffit que la correspondance située à gauche d'une correspondance donnée soit A:o et la correspondance située à droite de la correspondance donnée soit R:r pour que la correspondance donnée soit BB:b*.

Pour des correspondances en début et fin de chaque couple de chaînes, le module d'alignement MA insère à l'étape A1 des correspondances terminales «:* et »:* désignant les contextes gauche et droit extrêmes des chaînes. Pour l'exemple précédent, le module MA établit les règles terminales suivantes :

A:o $\Leftrightarrow$ «:*_BB:b* et
E:i $\Leftrightarrow$ S:z_»:*.

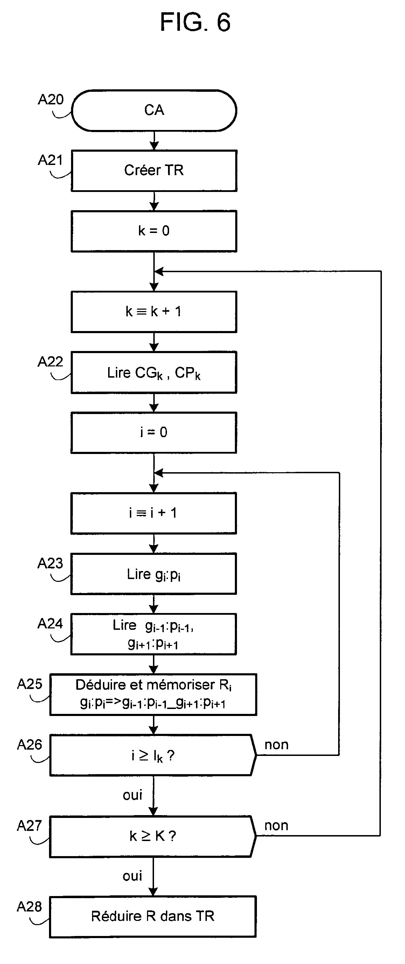

L'étape A2 de recensement des règles de transcription est détaillée lors de la description de la figure 6.

A l'étape A3, le module de construction d'automate MC construit l'automate compilant les règles de transcription recensées R. L'automate comprend des états Et et des transitions T déduits de l'analyse de chaque règle de transcription R. Un état définit un lien entre deux correspondances consécutives dans des chaînes graphique et phonétique associées. Une règle de transcription possède deux états de l'automate. Par exemple, pour une règle $R_i$ telle que :

$g_i:p_i \Leftrightarrow g_{i-1}:p_{i-1}\_g_{i+1}:p_{i+1}$,

un premier état définit le lien entre la correspondance $g_{i-1}:p_{i-1}$ et la correspondance $g_i:p_i$ et un deuxième état définit le lien entre la correspondance $g_i:p_i$ et la correspondance $g_{i+1}:p_{i+1}$. Chaque état $Et_q=g1_q:p1_q\_g2_q:p2_q$ représente donc un lien entre une première correspondance $g1_q:p1_q$ et une deuxième correspondance g2q:p2q. Un état initial Etinit et un état final Etfin, ne dépendant pas des règles de transcription, sont créés lors de l'exécution du procédé.

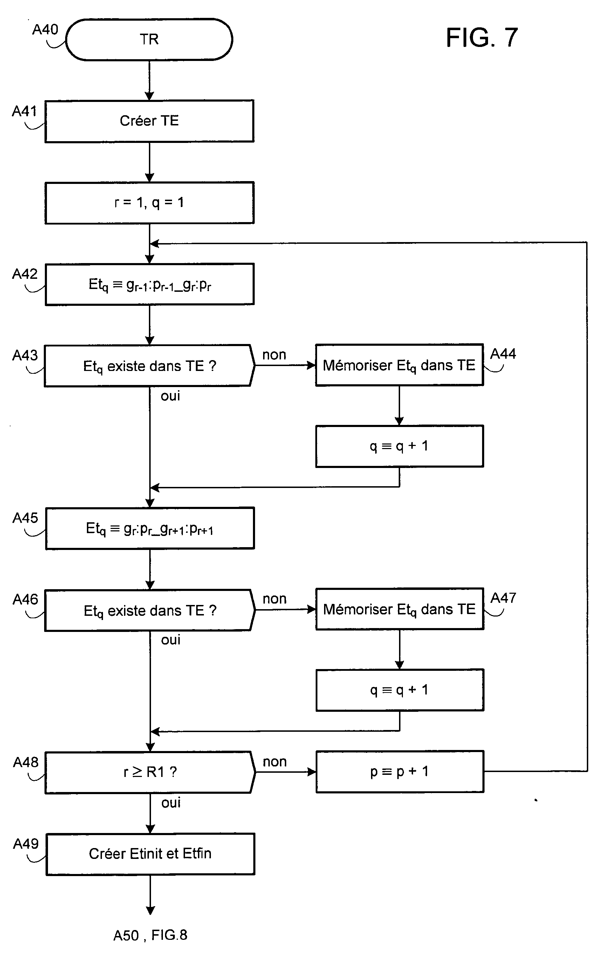

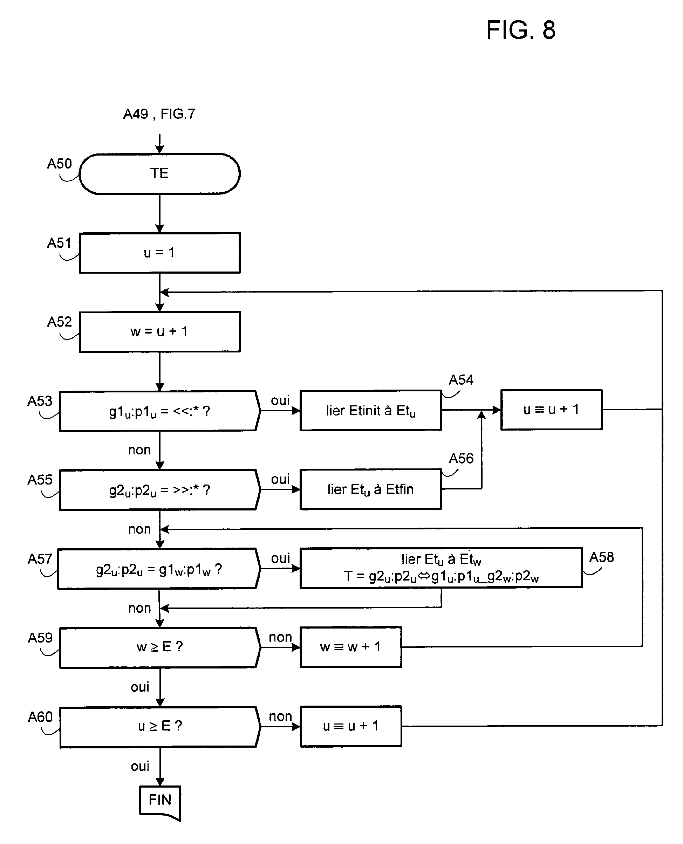

Le module de construction MC effectue également le chaînage reliant les états Et entre eux par des transitions T en fonction de l'analyse de chaque règle de transcription R recensée. L'étape A3 pour construire un automate à états finis compilant toutes les règles de transcription est détaillée lors de la description des figures 7 et 8.

Chaque transition T de l'automate chaîne deux états ayant en commun une même correspondance. Toutes les transitions T relatives à la transcription d'une chaîne graphique en une chaîne phonétique appartiennent à un même chemin de transitions CT dans l'automate.

En fin d'exécution de l'étape AU1 de construction d'automate A0-A3, l'automate compilant toutes les règles de transcription R recensées à partir du corpus C est construit comme représenté à la figure 4 et enregistré sous la forme d'un fichier dans la base de données BD. Comme représenté à la figure 4, l'automate est schématisé par un treillis dont les noeuds situent les états. Des chemins de transition CT dans le treillis commencent par l'état initial Etinit, traversent les noeuds et se terminent par l'état final Etfin. La figure 4 schématise l'automate en commençant par l'état initial qui est chaîné à des états Et1, Et2 et Et3 incluant une correspondance terminale de début «:*. Par exemple l'état Et1=«:*_A:o est lié à l'état initial. Chaque état est chaîné au moins à un autre état selon une transition équivalente à la règle de transcription associant les deux états de la transition. Par exemple l'état Et1 est chaîné à l'état Et4 selon la règle de transcription, appelée transition, T = A:o $\Leftrightarrow$ <<:*_BB:b*. Tout état incluant une correspondance terminale de fin >>:* est chaîné à l'état final Etfin.

La figure 5 montre des sous-étapes A11 à A15 de **l'étape A1** exécutées par le module d'alignement MA relative à la correspondance de chaque élément graphique $g_m$ d'une chaîne graphique CG à chaque élément phonétique $p_n$ de la chaîne phonétique associée CP. Les alignements exécutés à l'étape A1 résultent d'une analyse de tous les couples de chaînes (CG, CP) dans le corpus C.

L'étape d'alignement repose sur la lecture A0 du corpus de transcription initial C comportant les chaînes graphiques CG composées de M éléments graphiques $g_m$ et les chaînes phonétiques CP associées aux chaînes graphiques CG et composées de N éléments phonétiques $P_n$.

A la sous-étape A11, des premières probabilités de correspondance $P(g_m|p_n)$ pour qu'un élément graphique $g_m$ corresponde à l'élément phonétique $p_n$ sont en priorité estimées à partir des chaînes graphiques CG et des chaînes phonétiques CP du corpus de transcription initial C et sont enregistrées dans la base de données BD avec le corpus de transcription C. La première probabilité de la correspondance $g_m:p_n$ est énoncée en fonction notamment du nombre de fois où l'élément graphique $g_m$ est retranscrit en l'élément phonétique $p_n$ dans les diverses transcriptions de chaînes graphique et phonétique CG, CP incluses dans le corpus C et en fonction du rang de l'élément phonétique $p_n$ dans la chaîne phonétique CP déduit du rang de l'élément graphique $g_m$ dans la chaîne graphique CG.

A la sous-étape A12, des deuxièmes probabilités $P(g_1,...g_m|p_1-p_n)$ sont déterminées pour chaque chaîne graphique CG et chaque chaîne phonétique CP du corpus de transcription C. La chaîne graphique CG comprend M éléments graphiques consécutifs $g_1$ à $g_M$ et la chaîne phonétique CP correspondant à la chaîne CG comprend N éléments phonétiques consécutifs $p_1$ à $p_N$ avec l'entier N différent, ou éventuellement égal à l'entier M. La probabilité P(CG|CP) est déterminée par une programmation dynamique, en utilisant la formule d'itération suivante pour tout couple m,n tel que $1 \leq n \leq N$ et $1 \leq m \leq M$ :

$P(g_1g_2...g_m|p_1p_2...p_n)=P(g_m|P_n)max[P(g_1g_2...g_{m-1}|P_1P_2...P_n), P(g_1g_2...g_1|p_1p_2...P_{n-1}). P(g_1g_2...g_{m-1}|p_1p_2...p_{n-1})]$

où $P(g_m|p_n)$ est la première probabilité de transcription élémentaire estimée à la sous-étape précédente A11 pour qu'un élément graphique $g_m$ corresponde à l'élément phonétique $p_n$ et où $P(g_1g_2\cdots g_{m-1}|p_1p_2\cdots p_n)$, $P(g_1g_2\cdots g_m|p_1p_2\cdots p_{n-1})$ et $P(g_1g_2\cdots g_{m-1}|p_1p_2\cdots p_{n-1})$ sont trois deuxièmes probabilités déterminées lors des itérations précédentes. A chaque itération, le module d'alignement MA construit et mémorise progressivement une matrice de deuxièmes probabilités $P(g_1,...g_m|p_1,...p_n)$ à M colonnes pour concaténations successives des M éléments graphiques et à N lignes pour concaténations successives des N éléments phonétiques, en opérant ligne par ligne et en commençant par la probabilité $P(g_1|p_1)$ et en finissant par la probabilité $P(g_1,...g_M|p_1,...p_N)$.

A la sous-étape A13, chaque itération relative à la (m.n)ième transcription $[(g_1,...g_m)|(p_1,...p_n)]$ établit un lien

entre le couple $(g_m,p_n)$ et le couple à la plus grande probabilité des trois deuxièmes probabilités déterminées précédemment parmi les trois couples $((g_{m-1},p_n)$, $(g_m,p_{n-1})$ and $(g_{m-1},p_{n-1})$. Ainsi à chaque détermination de probabilité $P(g_1,...g_m)|(p_1,...p_n)$. est enregistré dans le module MA un lien. Les liens tracent un chemin unique mémorisé progressivement dans le module MA et reliant le premier couple $(g_1, p_1)$ au dernier couple $(g_M, p_N)$ dans la matrice à M colonnes et N lignes. La topologie du chemin unique dans la matrice de taille M.N segmente les chaînes graphiques CG en graphèmes et les chaînes phonétiques CP en phonèmes et aligne les éléments graphiques $g_m$ et les éléments phonétiques $p_n$ en correspondance biunivoque.

Eventuellement à la sous-étape A14, grâce à la capacité de traitement élevée de l'ordinateur OD, d'autres boucles itératives de sous-étapes A11 à A13 peuvent être exécutées jusqu'à la convergence de l'étape d'alignement A1, c'est-à-dire jusqu'à ce que le chemin établi devienne constant d'une boucle à la suivante.

A la fin de l'étape A1, à la sous-étape A15, pour chaque couple de chaînes graphique et phonétique segmentées, sont insérées une correspondance graphème/phonème terminale <<:* placée au début du couple de chaînes graphique et phonétique et une correspondance graphème/phonème terminale de fin >>:* placée à la fin du couple de chaînes graphique et phonétique. Les résultats de l'alignement sont ensuite mémorisés dans le corpus d'alignement CA de chaînes graphiques et chaînes phonétiques alignées dans la base de données BD.

En référence à la figure 6, le module de recensement MR exécute à l'**étape A2** comportant des sous-étapes A20 à A28, le recensement des règles de transcription R à partir des correspondances fournies par le corpus d'alignement CA dans la base de données BD.

Suite à une lecture du corpus d'alignement CA à la sous-étape A20, le module de recensement MR crée la table de règles de transcription TR dans la base de données BD à la sous-étape A21. On rappelle qu'une règle dépend de correspondances gauche et droite d'une correspondance graphème/phonème $g_i:p_i$.

Le module de recensement MR recense les règles par itérations sur des pointeurs dans le corpus CA relatifs à l'indice k des couples de chaînes $CG_k$, $CP_k$ et l'indice i des correspondances $g_i:p_i$ dans le corpus CA, avec $1 \le I \le I_k$ et $1 \le k \le K$, de manière à lire un couple de chaînes graphique $CG_k$ et phonétique $CP_k$ à la sous-étape A22 et une correspondance $g_i:p_i$ de ce couple de chaînes à la sous-étape A23. Le module de recensement MR lit les correspondances gauche $g_{i-1}:p_{i-1}$ et droite $g_{i+1}:p_{i+1}$ à la sous-étape A24 de la correspondance $g_i:p_i$. Puis le module MR en déduit la règle de transcription associée $R_i$ :

$$g_i:p_i \Leftrightarrow g_{i-1}:p_{i-1} \_ g_{i+1}:p_{i+1}$$

et la mémorise dans la table de règles de transcription TR à la sous-étape A25. Tant que toutes les correspondances des chaînes graphique $CG_j$ et phonétique $CP_k$, comportant un nombre de correspondances $I_k$, ne sont pas lues à la sous-étape A26, le module MR place le pointeur i sur la correspondance suivante $g_{i+1}:p_{i+1}$ après la sous-étape A26. Puis tant que toutes les chaînes graphiques et les chaînes phonétiques du corpus d'alignement CA comportant K couples de chaînes ne sont pas lues, le module MR place le pointeur k sur le couple de chaînes graphique $CG_{k+1}$ et phonétique $CP_{k+1}$ après la sous-étape A27.

Quand toutes les règles de transcription R sont recensées et enregistrées dans la table TR, le module de recensement supprime toutes les règles redondantes dans la table TR à la sous-étape A28.

En référence maintenant aux figures 7 et 8, le module de construction MC exécute des sous-étapes A40 à A60 de l'**étape A3** de construction de l'automate à états finis. Cette construction d'automate comporte une première phase A40-A49 pour créer et numéroter des états Et de l'automate et une deuxième phase A50-A60 pour chaîner des états Et entre eux selon les règles de transcription R mémorisées dans la table de règles TR.

Au début de la première phase à la sous-étape A40, le module de construction MC lit progressivement les R1 règles de transcription que comporte la table TR. Le module de construction MC crée, la table d'états d'automate TE dans la base de données BD à la sous-étape A41.

A chaque lecture d'une règle de transcription $R_r$ désignée par un pointeur r dans la table de règles TR, un premier état est défini à la sous-étape A42, correspondant au lien entre la correspondance $g_r:p_r$ exprimée par la règle $R_r$ et sa correspondance gauche $g_{r-1}:p_{r-1}$. L'état est représenté de la manière suivante : $Et_q = g_{r-1}:p_{r-1} \ g_r:p_r$. Le module de construction MC vérifie la présence de l'état Etq dans la table d'états TE à la sous-étape A43. Si l'état Etq est nouveau, le module MC mémorise et numérote l'état Etq par l'indice q dans la table d'états TE à la sous-étape A44, et incrémente l'indice q.

Puis à la sous-étape A45, toujours selon la règle de transcription $R_r$ est défini un deuxième état correspondant au lien entre la correspondance $g_r:p_r$ exprimée par la règle $R_r$ et sa correspondance droite $g_{r+1}:p_{r+1}$. L'état est représenté de la manière suivante : $Etq = g_r:p_r \ g_{r+1}:p_{r+1}$. Aux sous-étapes A46 et 47, comme aux sous-étapes A43 et A44, le module de construction MC vérifie la présence de l'états Etq dans la table d'états TE et si l'état Etq est nouveau, le module mémorise et numérote l'état Etq par l'indice q dans la table d'états TE, et incrémente l'indice q. Sinon le module MC passe à la détermination d'états relatifs à d'autres règles, si toutes les règles n'ont pas encore été pointées à la sous-étape A48.

Dès que tous les états relatifs aux règles de transcription ont été créés, le module de construction MC crée un état initial Etinit et un état final Etfin indépendant des règles de transcription R, à la sous-étape A49.

En se référant à la figure 8, au début de la deuxième phase à la sous-étape A50, le module de construction MC lit progressivement la table d'états TE afin de chaîner les états par des liens. Pour construire chaque lien entre deux états, le module de construction MC incrémente deux pointeurs u et w dans la table TE afin de comparer l'état désigné par le premier pointeur u à l'état désigné par le deuxième pointeur w. Comme explicité préalablement, un état $Et = g1_u:p1_u\_g2_u:p2_u$ relie une première correspondance $g1_u:p1_u$ à une deuxième correspondance $g2_u:p2_u$. A la sous-étape A51, le premier pointeur u désigne un état $Et_u$ dans la table d'états TE et à la sous-étape A52, le deuxième pointeur w désigne l'état suivant $Et_u = Et_{u+1}$ dans la table TE.

A partir de l'état $Et_u$ désigné par le premier pointeur u, le module de construction MC compare, à la sous-étape A53, la première correspondance $g1_u:p1_u$ de cet état avec la correspondance terminale de début de chaîne <<:*. Si $g1_u:p1_u$ correspond à <<:*, le module de construction MC lie l'état initial Etinit à l'état $Et_u$ à la sous-étape A54, et les deux pointeurs sont ensuite incrémentés. Si $g1_u:p1_u$ ne correspond pas à <<:*, le module de construction MC compare la deuxième correspondance $g2_u:p2_u$ de l'état $Et_u$ à la correspondance terminale de fin de chaîne>>:*, à la sous-étape A55. Si $g2_u:p2_u$ correspond à >>:*, le module de construction lie l'état final Etfin à l'état $Et_u$ et les deux pointeurs sont incrémentés, à la sous-étape A56.

Si $g1_u:p1_u$ ne correspond pas à <<:* et $g2_u:p2_u$ ne correspond pas à >>:*, le module MC exécute plusieurs itérations des sous-étapes A57 à A60. A chaque itération le module MC compare, à la sous-étape A57, la deuxième correspondance $g2_u:p2_u$ de l'état $Et_u$ à la première correspondance $g1_w:p1_w$ de l'état $Et_w$ désigné par le deuxième pointeur w. Si $g2_u:p2_u$ est identique à $g1_w:p1_w$, le module de construction lie l'état $Et_u$ à l'état $Et_w$ par une transition T qui est équivalente à une règle de transcription R et qui chaîne les deux états $Et_u$ et $Et_w$, à la sous-étape A58 : $T = g2_u:p2_u \Leftrightarrow g1_u:p1_u\_g2_w:p2_w$. où $g1_u:p1_u$ est la correspondance gauche de la correspondance $g2_u:p2_u$ (= $g1_w:p1_w$) et $g2_w:p2_w$ est la correspondance droite de la correspondance $g2_u:p2_u$ commune aux états $Et_u$ et $Et_w$. Tant que le deuxième pointeur w n'a pas atteint le nombre E d'états dans la table d'états TE à la sous-étape A59, le pointeur w est incrémenté et la comparaison à la sous-étape A57 est réitérée. De même, tant que le premier pointeur u n'a pas atteint le nombre d'états E à la sous-étape A60, le pointeur u est incrémenté.

Chaque transition représentant un maillon du chaînage entre deux états déterminé par le module de construction MC est mémorisée dans la table d'états TE.

A la fin du chaînage, le module MC compile toutes les règles de transcription R déterminées sur la base du corpus d'alignement CA afin de construire l'automate AU composé d'un treillis de transducteurs correspondant respectivement aux états Et et liés par les transitions T selon les règles R à caractère déontique. L'automate est enregistré dans la base de données BD et ultérieurement lu par l'ordinateur OD pour le transmettre au module de construction de phonétiseur MCP et/ou à un serveur analyseur. Par exemple le serveur analyseur recherche un mot ou un nom dans un annuaire à partir d'une requête transmise depuis un terminal d'usager et incluant un mot ou nom mal orthographié et appliquée à l'automate, la langue prédéterminée de l'automate étant celle de l'annuaire.

Comme montré à la figure 9, l'étape P2 de construction d'un phonétiseur sur le fondement de l'automate précédemment construit comprend des sous-étapes P20 à P26 exécutées par le module MDP de l'ordinateur OD pour estimer des probabilités P(T) de transitions de l'automate.

En supposant que l'automate comprend N transitions $T_1$ à $T_N$, la première sous-étape P20 pondère chaque transition $T_n$ de l'automate par une probabilité de transition $P(T_n)$, avec $1 \leq n \leq N$. Les probabilités de transition sont initialement choisies arbitrairement à des valeurs qui respectent la condition suivante : à chaque noeud formé par l'intersection de transitions et correspondant à des états, la somme des probabilités de transitions sortant du noeud suivant le sens de la correspondance terminale de début vers la correspondance terminale de fin est égale à 1. Pour chaque transition $T_n$, une variable VT associée à la transition et représentative du nombre de traversées de la transition $T_n$ par des chemins parcourus lors de transcriptions de chaîne est définie et mise à zéro.

A la sous-étape P21, pour une chaîne graphique donnée $CG_k$ désignée par un pointeur k dans le corpus C, le module MDP lit la chaîne graphique $CG_k$ et détermine dans l'automate, des probabilités de transcription $P(CG_k|CP_1)$ = $P(CT_1)$ à $P(CG_k|CP_J)$ = $P(CT_J)$ de la chaîne graphique $CG_k$ en J chaînes phonétiques $CP_1$ à $CP_J$ associées dans le corpus C. Pour chaque chaîne phonétique associée CPj, avec $1 \leq j \leq J$ et l'entier $J \geq 1$, est parcouru dans l'automate un chemin de transitions CTj reflétant la succession des transitions T décrivant la transcription $(CG_k|CP_j)$ entre la chaîne graphique $CG_k$ et la chaîne phonétique associée $CP_j$. La probabilité de transcription $P(CG_k|CP_j)$ = $P(CTj)$ est le produit des probabilités P(T) des transitions T suivant le chemin de transitions CTj .

Puis à la sous-étape P22 le module MDP sélectionne parmi les chemins de transitions $CT_1$ à $CT_J$ relatifs à la chaîne graphique $CG_k$ le chemin de transitions $CT_{max}$ dont la probabilité de transcription $P(CG_k|CP)$ est la plus grande.

A la sous-étape P23, le module MDP incrémente d'une unité les variables VT pour lesquelles les transitions T forment le chemin de transitions $CT_{max}$ sélectionné à la sous-étape P22. Tant que le corpus C n'est pas totalement lu à la sous-étape P24, le module MDP répète les sous-étapes P21 à P23 pour chaque chaîne graphique $GC_k$ lue en incrémentant le pointeur k.

A la fin de la lecture du corpus, le module MDP enregistre dans la base de données BD les probabilités de transition $P(T_n)$ précédemment définies et estime de nouvelles probabilités de transition en fonction des variables VT, à la sous-étape P25. Chaque nouvelle probabilité de transition $P(T_n)$ est estimée égale au rapport de la variable associée $VT_n$ sur la somme des variables VT des transitions sortant d'un même noeud de transitions. Par exemple, pour un état correspondant à un noeud ayant trois transitions sortantes $T_1$, $T_2$ et $T_3$ dont les variables respectives sont $VT_1$, $VT_2$ et $VT_3$, la probabilité de la transition $T_1$ est $VT_1/(VT_1+VT_2+VT_3)$.

Le module MDP réitère les sous-étapes précédentes P21 à P26 en fonction des nouvelles probabilités de transitions jusqu'à une sensible convergence des probabilités de transition $P(T_n)$. L'automate ainsi combiné aux probabilités des transitions du treillis de l'automate constitue le phonétiseur.

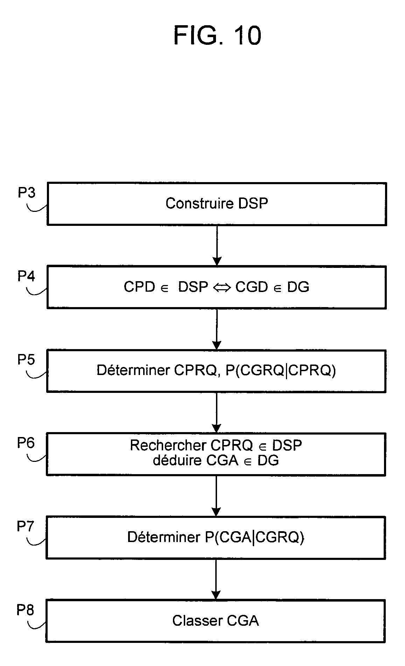

En référence maintenant à la figure 10, le **procédé de vérification de faute d'usage** mis en oeuvre dans le système vérificateur SV comprend des étapes principales P3 à P8.

En référence à la figure 1, le système vérificateur incorpore le phonétiseur stochastique construit P et la base de données BD qui inclut initialement le dictionnaire informatique de chaînes graphiques DG. Les chaînes graphiques, dites graphies, mémorisées dans le dictionnaire DG sont, par exemple, des noms patronymiques parmi lesquels peut être prévu le nom recherché par un usager du système vérificateur. Par exemple un extrait du dictionnaire de chaînes graphiques est le suivant : jean, gean, genn. Le système vérificateur vérifie l'exactitude d'une chaîne graphique requise CGRQ dans une requête grâce à un appariement de la chaîne CGRQ à une ou plusieurs chaînes graphiques attestées CGA du dictionnaire de chaînes graphiques par le phonétiseur P. Pour l'appariement, le phonétiseur rapproche deux chaînes graphiques en identifiant leurs chaînes phonétiques associées dîtes signatures phonétiques.

Pour pouvoir fonctionner, le système vérificateur doit disposer d'un dictionnaire informatique de signatures phonétiques DSP comportant des chaînes phonétiques CPD associées aux chaînes graphiques CGD du dictionnaire de chaînes graphiques DG. Pour cela, le module de construction MCD dans le phonétiseur construit et mémorise progressivement à l'étape P3, le dictionnaire DSP avec des signatures phonétiques qui résultent, dans le phonétiseur P, respectivement de transcriptions de chaînes graphiques CGD lues dans le dictionnaire de chaînes graphiques DG. En se référant à l'exemple cité précédemment concernant le dictionnaire de chaînes graphiques :

- la transcription de "jean" donne les signatures phonétiques "Z~a" et "Zin" ;
- la transcription de "gean" donne les signatures phonétiques "Z~a" et "Zin" ; et
- la transcription de "genn" donne la signature phonétique "Zen".

Lors de chaque transcription d'une chaîne graphique CGD en une signature phonétique CPD, le module MCD détermine au moyen du phonétiseur la probabilité de transcription P(CGD|CPD). En se référant à l'exemple précédant, on a :

- P(jean|Z~a) = 0,1 ;
- P(jean|Zin) = 0,9 ;
- P(gean|Z~a) = 0,5 ;
- P(gean|Zin) = 0,5 ; et
- P(genn|Zen) = 0,6.

A l'étape P4, le module MEL établit un lien informatique entre chaque signature phonétique CPD du dictionnaire de signatures phonétiques DSP et une chaîne graphique CGD correspondante du dictionnaire de chaînes graphiques DG. Une signature phonétique CPD comporte autant de liens qu'il y a de chaînes graphiques correspondantes à la signature phonétique. Le module MEL mémorise pour chaque lien la probabilité de transcription P(CGD|CPD) de la signature phonétique CPD et la chaîne graphique associée CGD. Par exemple la signature phonétique "Z~a" du dictionnaire de signatures phonétiques est reliée aux chaînes graphiques "jean" et "gean" mémorisées dans le dictionnaire de chaînes graphiques.

Après l'étape P4, le système vérificateur de faute d'usage est prêt à fonctionner pour vérifier l'exactitude d'une chaîne graphique CGRQ requise dans une requête et appliquée au système vérificateur SV.

Les étapes P5 à P8 concernent la vérification proprement dite d'une chaîne graphique requise CGRQ dans le système vérificateur.

A l'étape P5, le module MTCRQ dans le phonétiseur transcrit la chaîne graphique requise CGRQ en au moins une signature phonétique, c'est-à-dire une ou plusieurs signatures phonétiques correspondantes CPRQ. Par exemple, la chaîne graphique requise CGRQ "jen" est transcrite via le phonétiseur en des signatures phonétiques de requête "Z~a" et "Zen". Lors de la transcription de la chaîne graphique requise CGRQ, des probabilités de transcription P(CGRQ|CPRQ) de ladite chaîne graphique en la ou les signatures phonétiques sont également déterminées, par exemple P(jen|Z~a) = 0,1 et P(jen|Zen) = 0,9.

A l'étape P6, le module MRCD recherche les signatures phonétiques CPD dans le dictionnaire de signatures phonétiques DSP identiques aux signatures phonétiques de requête CPRQ, ou en variante similaires en dépendance d'un seuil de vraisemblance. Puis le module MRCD déduit des signatures phonétiques CPD trouvées dans le dictionnaire DSP, des chaînes graphiques attestées CGA comprises dans le dictionnaire de chaînes graphiques DG. Par exemple, pour la chaîne graphique requise "jen" associée à la signature phonétique "Z~a", le module MRCD produit les chaînes graphiques attestées "jean" et "gean" mémorisées dans le dictionnaire de chaînes graphiques DG. Pour la même chaîne graphique requise "jen" associée à la signature phonétique "zen", le module MRCD produit la chaîne graphique attestée "genn". Ces chaînes graphiques attestées sont toutes reliées à la même signature phonétique CPD "Z~a" ou "zen" mémorisée dans le dictionnaire de signatures phonétiques DSP. Chaque lien reliant une chaîne graphique attesté CGA à une signature phonétique CPD est défini avec une probabilité P(CGA|CPD). Par exemple P(jean|Z~a)=0,1, P(gean|Z~a) =0, 5 et P (genn|Zen) =0, 6.

A l'étape P7, le module MDPU détermine des probabilités d'usage des chaînes graphiques CGA attestées précédemment en fonction de la chaîne graphique requise. Une probabilité d'usage est égal au produit de la probabilité de transcription P(CGA|CPD) d'une chaîne graphique attestée CGA du dictionnaire de chaînes graphiques DG en une signature phonétique CPD par la probabilité de transcription P(CGRQ|CPD) de la chaîne graphique requise CGRQ en ladite signature phonétique CPD (=CPRQ). En se référant à l'exemple précédent :

$$P(jean|jen) = P(jean|Z{\sim}a) \times P(jen|Z{\sim}a) = 0,01 ;$$

$$P(gean|jen) = P(gean|Z{\sim}a) \times P(jen|Z{\sim}a) = 0,05 ;$$

et

$$P(genn|jen) = P(genn|Zen) \times P(jen|Zen) = 0,54.$$

Le module MCL classe ensuite à l'étape P8 les chaînes graphiques attestées CGA pour la requête selon les probabilités d'usage précédemment déterminées, de préférence selon l'ordre décroissant des probabilités d'usage. En reprenant l'exemple ci-dessus, le classement des chaînes graphiques solutions est le suivant: genn, gean et jean.

Selon une implémentation préférée, les étapes AU1 et P2 des procédés de construction de l'automate et du phonétiseur sont déterminées par les instructions des premier et deuxième **programmes** incorporés dans le système informatique, tel qu'un serveur ou un ordinateur. Le premier programme comporte des instructions de programme qui, lorsque ledit programme est chargé et exécuté dans le système informatique dont le fonctionnement est alors commandé par l'exécution du programme, réalisent les étapes du procédé de construction d'automate selon l'invention. Le deuxième programme comporte des instructions de programme qui, lorsque ledit programme est chargé et exécuté dans le système informatique dont le fonctionnement est alors commandé par l'exécution du programme, réalisent les étapes du procédé de construction de phonétiseur selon l'invention.

De même les étapes du procédé pour vérifier l'exactitude d'une chaîne graphique requise par le système vérificateur de faute d'usage SV comportant ledit phonétiseur sont déterminées par les instructions d'un troisième programme incorporé dans le système informatique. Le troisième programme comporte des instructions de programme qui, lorsque ledit troisième programme est chargé et exécuté dans le système informatique dont le fonctionnement est alors commandé par l'exécution du programme, réalisent les étapes de procédé de vérification de l'exactitude d'une chaîne graphique selon l'invention.

En conséquence, l'invention s'applique également à des programmes d'ordinateur, notamment des programmes d'ordinateur sur ou dans un support d'informations, adapté à mettre en oeuvre l'invention. Ces programmes peuvent utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le **support d'informations** peut être n'importe quelle entité ou dispositif capable de mémoriser les programmes. Par exemple, le support peut comporter un moyen de mémorisation, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Les programmes selon l'invention peuvent être en particulier téléchargé sur un réseau de type internet.

Alternativement, le support d'informations peut être un circuit intégré dans lequel les programmes sont incorporés, le circuit étant adapté pour exécuter ou pour être utilisé dans l'exécution des procédés selon l'invention.

**Revendications**

1. Procédé pour construire informatiquement un automate compilant des règles de transcription graphème/phonème à partir d'un corpus de transcription initial (C) comprenant des couples composés chacun d'une chaîne graphique (CG) incluant des éléments graphiques ($g_m$) et d'une chaîne phonétique (CP) incluant des éléments phonétiques ($p_n$), **caractérisé en ce que** le procédé comprend les étapes suivantes, après un enregistrement (A1) de correspondances graphème/phonème ($g_i$:$p_i$) dans une base de données (BD) par alignement des éléments graphiques ($g_m$) des chaînes graphiques (CG) avec les éléments phonétiques ($p_n$) des chaînes phonétiques (CP) associées aux chaînes graphiques :

   recensement et enregistrement dans la base (A2) des règles de transcription (R) à partir d'une analyse de correspondances gauche ($g_{i-1}$:$p_{i-1}$) et droite ($g_{i+1}$:$p_{i+1}$) de chaque correspondance graphème/phonème ($g_i$:$p_i$) dans chaque couple de chaînes graphique et phonétique associées, et
   construction et enregistrement (A3) sous la forme d'un fichier dans la base dudit automate comportant des états (Et) et transitions d'état (T) déduits des règles de transcription recensées (R), chaque état étant un lien entre deux correspondances graphème/phonème consécutives ($g_{i-1}$:$p_{i-1}$,$g_i$:$p_i$ ; $g_i$:$p_i$,$g_{i+1}$:$p_{i+1}$) dans un couple de chaînes graphique et phonétique, et chaque transition (T) chaînant deux états ayant en commun une correspondance.

2. Procédé conforme à la revendication 1, selon lequel la construction de l'automate comprend une création et une numérotation (A43 - A47) des états (Et) en fonction des règles de transcription recensées (R) et un chaînage (A58) des états entre eux par des transitions (T) dépendant de correspondances communes aux états.

3. Procédé conforme à la revendication 1 ou 2, comprenant une création (A49) d'états initial (Etinit) et final (Etfin) représentatifs respectivement d'états de début et de fin de l'automate.

4. Procédé conforme à l'une quelconque des revendications 1 à 3, selon lequel l'alignement (A1) comprend une insertion (A15) de correspondances graphème/phonème terminales placées au début et à la fin de chaque couple de chaînes graphique et phonétique (CG, CP).

5. Système informatique de construction d'un automate compilant des règles de transcription graphème/phonème comportant une base de données (BD) dans laquelle est mémorisé un corpus de transcription initial (C) comprenant des couples composés chacun d'une chaîne graphique (CG) incluant des éléments graphiques ($g_m$) et d'une chaîne phonétique (CP) incluant des éléments phonétiques ($p_n$), **caractérisé en ce qu'**il comprend :

   un module (MR) pour recenser et enregistrer dans la base des règles de transcription (R) à partir d'une analyse de correspondances gauche ($g_{i-1}$:$p_{i-1}$) et droite ($g_{i+1}$:$p_{i+1}$) de chaque correspondance graphème/phonème ($g_i$: $p_i$) dans chaque couple de chaînes graphique et phonétique, toutes les correspondances étant déterminées par un module d'alignement (MA) alignant des éléments graphiques ($g_m$) des chaînes graphiques (CG) aux éléments phonétiques ($p_n$) des chaînes phonétiques (CP) en des correspondances graphème/phonème ($g_i$:$p_i$) enregistrées dans la base de données (BD), et
   un module (MC) pour construire et enregistrer sous la forme d'un fichier dans la base ledit automate comportant des états (Et) et transitions d'état (T) déduits des règles de transcription recensées (R), chaque état étant un lien entre deux correspondances graphème/phonème consécutives ($g_{i-1}$:$p_{i-1}$,$g_i$:$p_i$ ; $g_i$:$p_i$,$g_{i+1}$:$p_{i+1}$) dans un couple de chaînes graphique et phonétique, et chaque transition (T) chaînant deux états ayant en commun une correspondance.

6. Programme d'ordinateur apte à être mis en oeuvre sur un système informatique pour construire un automate compilant des règles de transcription graphème/phonème à partir d'un corpus de transcription initial (C) comprenant des couples composés chacun d'une chaîne graphique (CG) incluant des éléments graphiques ($g_m$) et d'une chaîne phonétique (CP) incluant des éléments phonétiques ($p_n$), **caractérisé en ce que** le programme comprend des instructions de programme qui, lorsque le programme est chargé et exécuté sur un système informatique, réalisent les étapes suivantes, après un enregistrement (A1) de correspondances graphème/phonème ($g_i$:$p_i$) dans une base de données (BD) par alignement des éléments graphiques ($g_m$) des chaînes graphiques (CG) avec les éléments phonétiques ($p_n$) des chaînes phonétiques (CP) associées aux chaînes graphiques :

   recensement et enregistrement dans la base (A2) des règles de transcription (R) à partir d'une analyse de correspondances gauche ($g_{i-1}$:$p_{i-1}$) et droite ($g_{i+1}$:$p_{i+1}$) de chaque correspondance graphème/phonème ($g_i$:$p_i$)

dans chaque couple de chaînes graphique et phonétique associées, et

construction et enregistrement (A3) sous la forme d'un fichier dans la base dudit automate comportant des états (Et) et transitions d'état (T) déduits des règles de transcription recensées (R), chaque état étant un lien entre deux correspondances graphème/phonème consécutives ($g_{i-1}$:$p_{i-1}$,$g_i$:$p_i$ ; $g_i$:$p_i$,$g_{i+1}$:$p_{i+1}$) dans un couple de chaînes graphique et phonétique, et chaque transition (T) chaînant deux états ayant en commun une correspondance.

7. Procédé pour construire informatiquement un phonétiseur à partir d'un corpus (C) enregistré dans une base de données (BD) et comprenant des couples composés chacun d'une chaîne graphique (CG) incluant des éléments graphiques et d'une chaîne phonétique (CP) incluant des éléments phonétiques, **caractérisé en ce qu'**il comprend les étapes suivantes :

construction informatique (AU1) et enregistrement dans la base (BD), d'un automate compilant des règles de transcription (R) résultant d'une analyse de correspondances graphème/phonème dans les couples de chaînes lus dans le corpus (C), ledit automate comportant des états (Et) et transitions d'état déduits des règles de transcription, chaque état étant un lien entre deux correspondances graphème/phonème consécutives dans un couple de chaînes graphique et phonétique, et chaque transition (T) chaînant deux états ayant en commun une correspondance graphème/phonème, les transitions relatives à la transcription d'une chaîne graphique en une chaîne phonétique formant un chemin de transitions dans l'automate, et

détermination (P2) et enregistrement dans la base, de probabilités (P(T)) des transitions en sortie de noeuds de l'automate situant les correspondances graphème/phonème communes aux transitions, afin de construire le phonétiseur (P) en combinant l'automate et les probabilités de transitions déterminées.

8. Procédé conforme à la revendication 7, selon lequel la construction d'automate comprend les sous-étapes suivantes :

alignement (A1) des éléments graphiques des chaînes graphiques (CG) avec les éléments phonétiques des chaînes phonétiques (CP) associées aux chaînes graphiques en des correspondances graphème/phonème, recensement (A2) des règles de transcription à partir d'une analyse de correspondances gauche et droite de chaque correspondance graphème/phonème dans chaque couple de chaînes graphique et phonétique associées, et

construction (A3) et enregistrement sous la forme d'un fichier dans la base dudit automate comportant des états (Et) et transitions (T) déduits des règles de transcription recensées

9. Procédé conforme à la revendication 7 ou 8, selon lequel l'étape de détermination de probabilités de transitions comprend les sous-étapes suivantes :

pondération (P20) de chaque transition ($T_n$) de l'automate par une probabilité de transition ($P(T_n)$) choisie arbitrairement,

détermination (P21) de probabilité (P(CT)) d'au moins un chemin de transitions représentatif de la transcription de chaque chaîne graphique en au moins une chaîne phonétique associée en fonction des probabilités des transitions du chemin,

sélection (P22) pour chaque chaîne graphique du chemin de transitions ($CT_{max}$) ayant la plus grande probabilité, incrémentation (P23) de variables (VT) respectivement associées aux transitions et représentatives de nombres de traversées des transitions par les chemins de transitions sélectionnés ($CT_{max}$), et

estimation (P25) de nouvelles probabilités de transition (P(T)) en fonction des variables de transition (VT) précédemment déterminées.

10. Procédé conforme à la revendication 9, selon lequel l'étape de détermination de probabilités de transitions comprend en outre une réitération (P26) des étapes de détermination de probabilité de chemin, sélection, incrémentation et estimation en fonction des nouvelles probabilités de transition jusqu'à une sensible convergence desdites probabilités de transition afin de combiner l'automate et les probabilités de transition en le phonétiseur (P).

11. Système informatique pour construire un phonétiseur à partir d'un corpus (C) enregistré dans une base de données (BD) et comprenant des couples composés chacun d'une chaîne graphique (CG) incluant des éléments graphiques et d'une chaîne phonétique (CP) incluant des éléments phonétiques, **caractérisé en ce qu'**il comprend :

un module (MCA) pour construire informatiquement et enregistrer dans la base (BD), un automate compilant des règles de transcription (R) résultant d'une analyse de correspondances graphème/phonème dans les couples de chaîne lus dans le corpus (C), ledit automate comportant des états (Et) et transitions d'état déduits des règles de transcription, chaque état étant un lien entre deux correspondances graphème/phonème consécutives dans un couple de chaînes graphique et phonétique, et chaque transition (T) chaînant deux états ayant en commun une correspondance graphème/phonème, les transitions relatives à la transcription d'une chaîne graphique en une chaîne phonétique formant un chemin de transitions dans l'automate, et

un module (MDP) pour déterminer et enregistrer dans la base, des probabilités (P(T)) des transitions en sortie de noeuds de l'automate situant les correspondances graphème/phonème communes aux transitions, afin de construire le phonétiseur (P) en combinant l'automate et les probabilités de transitions déterminées.

**12.** Programme d'ordinateur apte à être mis en oeuvre sur un système informatique pour construire un phonétiseur (P) à partir d'un corpus (C) enregistré dans une base de données (BD) et comprenant des couples composés chacun d'une chaîne graphique (CG) incluant des éléments graphiques et d'une chaîne phonétique (CP) incluant des éléments phonétiques, **caractérisé en ce qu'**il comprend des instructions de programme qui, lorsque le programme est chargé et exécuté sur ledit système informatique, réalisent les étapes :

construction informatique (AU1) et enregistrement dans la base (BD), d'un automate compilant des règles de transcription (R) résultant d'une analyse de correspondances graphème/phonème dans les couples de chaînes lus dans le corpus (C), ledit automate comportant des états (Et) et transitions d'état déduits des règles de transcription, chaque état étant un lien entre deux correspondances graphème/phonème consécutives dans un couple de chaînes graphique et phonétique, et chaque transition (T) chaînant deux états ayant en commun une correspondance graphème/phonème, les transitions relatives à la transcription d'une chaîne graphique en une chaîne phonétique formant un chemin de transitions dans l'automate, et

détermination (P2) et enregistrement dans la base, de probabilités (P(T)) des transitions en sortie de noeuds de l'automate situant les correspondances graphème/phonème communes aux transitions, afin de construire le phonétiseur (P) en combinant l'automate et les probabilités de transitions déterminées.

**13.** Procédé informatique pour vérifier l'exactitude d'une chaîne graphique requise (CGRQ) au moyen d'un phonétiseur (P) et d'un dictionnaire informatique de chaînes graphiques (DG), **caractérisé en ce que** le procédé comprend les étapes suivantes :

construction (AU1, P2) du phonétiseur par construction informatique d'un automate compilant des règles de transcription (R) résultant d'une analyse de correspondances graphème/phonème dans des couples de chaînes graphique et phonétique lus dans un corpus (C) et par détermination de probabilités (P(T)) de transitions entre des correspondances graphème/phonème,

au moyen du phonétiseur (P), construction (P3, P4) d'un dictionnaire informatique de signatures phonétiques (DSP) en transcrivant chacune des chaînes graphiques (CGD) du dictionnaire de chaînes graphiques (DG) en au moins une signature phonétique (CPD) et en reliant informatiquement les signatures phonétiques aux chaînes graphiques, et détermination de probabilités des transcriptions des chaînes graphiques en les signatures phonétiques,

au moyen du phonétiseur (P), détermination (P5) d'une transcription de la chaîne graphique requise (CGRQ) en au moins une signature phonétique de requête (CPRQ) et détermination d'une probabilité de la transcription précédente, et

recherche (P6) de signatures phonétiques (CPD) dans le dictionnaire de signatures phonétiques (DSP) sensiblement identiques à ladite au moins une signature phonétique de requête (CPRQ) pour en déduire des chaînes graphiques attestées (CGA) mémorisées dans le dictionnaire de chaînes graphiques (DG) et reliées à ladite au moins une signature phonétique.

**14.** Procédé conforme à la revendication 13, comprenant en outre une détermination (P7) de probabilités d'usage des chaînes graphiques attestées en fonction de ladite probabilité de transcription précédente déterminée, et un classement (P8) des chaînes graphiques attestées en fonction des probabilités d'usage déterminées.

**15.** Système informatique pour vérifier l'exactitude d'une chaîne graphique requise (CGRQ), comprenant un phonétiseur (P) et un dictionnaire informatique de chaînes graphiques (DG), **caractérisé en ce qu'**il comprend :

un moyen (MCA, MDP) pour construire le phonétiseur par construction informatique d'un automate compilant des règles de transcription (R) résultant d'une analyse de correspondances graphème/phonème dans des couples de chaînes graphique et phonétique lus dans un corpus (C) et par détermination de probabilités (P(T)) de transitions entre des correspondances graphème/phonème,

un moyen (MCD) à l'aide du phonétiseur pour construire un dictionnaire informatique de signatures phonétiques (DSP) en transcrivant chacune des chaînes graphiques (CGD) du dictionnaire de chaînes graphiques (DG) en au moins une signature phonétique (CPD) et en reliant informatiquement les signatures phonétiques aux chaînes graphiques,

un moyen (MCD) à l'aide du phonétiseur pour déterminer des probabilités des transcriptions des chaînes graphiques (CGD) en les signatures phonétiques,

un moyen (MTCRQ) à l'aide du phonétiseur pour déterminer une transcription de la chaîne graphique requise (CGRQ) en au moins une signature phonétique de requête (CPRQ),

un moyen (MTCRQ) pour déterminer une probabilité de la transcription précédente, et

un moyen (MRCD) pour rechercher des signatures phonétiques (CPD) dans le dictionnaire de signatures phonétiques (DSP) sensiblement identiques à ladite au moins une signature phonétique de requête (CPRQ) pour en déduire des chaînes graphiques attestées (CGA) mémorisées dans le dictionnaire de chaînes graphiques (DG) et reliées à ladite au moins une signature phonétique.

16. Programme d'ordinateur apte à être mis en oeuvre sur un système informatique pour vérifier l'exactitude d'une chaîne graphique requise (CGRQ), comprenant un phonétiseur (P) et un dictionnaire informatique de chaînes graphiques (DG), **caractérisé en ce que** le programme comprend des instructions de programme qui, lorsque le programme est chargé et exécuté sur ledit système informatique, réalisent les étapes de :

construction (AU1, P2) du phonétiseur par construction informatique d'un automate compilant des règles de transcription (R) résultant d'une analyse de correspondances graphème/phonème dans des couples de chaînes graphique et phonétique lus dans un corpus (C) et par détermination de probabilités (P(T)) de transitions entre des correspondances graphème/phonème,

construction (P3, P4) d'un dictionnaire informatique de signatures phonétiques (DSP) en transcrivant chacune des chaînes graphiques (CGD) du dictionnaire de chaînes graphiques (DG) en au moins une signature phonétique (CPD) et en reliant informatiquement les signatures phonétiques aux chaînes graphiques, et détermination de probabilités des transcriptions des chaînes graphiques en les signatures phonétiques,

détermination (P5) d'une transcription de la chaîne graphique requise (CGRQ) en au moins une signature phonétique de requête (CPRQ) et détermination d'une probabilité de la transcription précédente, et

recherche (P6) de signatures phonétiques (CPD) dans le dictionnaire de signatures phonétiques (DSP) sensiblement identiques à ladite au moins une signature phonétique de requête (CPRQ) pour en déduire des chaînes graphiques attestées (CGA) mémorisées dans le dictionnaire de chaînes graphiques (DG) et reliées à ladite au moins une signature phonétique.

17. Phonétiseur pour transcrire une chaîne graphique requise (CGRQ) en une signature phonétique, recourant à un dictionnaire informatique de chaînes graphiques (DG), **caractérisé en ce qu'**il comprend :

un moyen (MCD) pour construire un dictionnaire informatique de signatures phonétiques (DSP) en transcrivant les chaînes graphiques (CGD) du dictionnaire de chaînes graphiques (DG) chacune en au moins une signature phonétique (CPD) et en les reliant informatiquement aux chaînes graphiques,

un moyen (MCD) pour déterminer des probabilités de transcriptions des chaînes graphiques en les signatures phonétiques,

un moyen (MTCRQ) pour déterminer une transcription de la chaîne graphique requise (CGRQ) en au moins une signature phonétique (CPRQ), et

un moyen (MTCRQ) pour déterminer une probabilité de la transcription précédente.

# FIG. 1

# FIG. 2

AU1 Construire un automate

P2 Construire un phonétiseur

# FIG. 3

AU1

A0 C

A1 Aligner chaînes de C

A2 Recenser R
(FIG. 5)

A3 Construire et chaîner
l'automate
(FIGS. 6, 7)

# FIG. 4

<<:*        A:O              BB:b*

          Et1 ———— Et4 - - - - -, Etn        >>:*

<<:*                     R:r

          Et2 ———— Et5 ———— Etm        >>:*     Etfin

Etinit            T:t        A:a

<<:*      BB:b*           I:i        >>:*

          Et3 ———— Et6         A:O - - - - - Eto

FIG. 5

A0 — C

A11 — Estimer $P(g_m|p_n)$

A12 — Déterminer $P(g_1,... g_m|p_1,... p_n)$

A13 — Etablir un chemin unique et
déduire l'alignement des $g_m$ et $p_n$ dans (CG|CP)

A14 — Réitérer l'estimation    oui

non

A15 — Ajouter des correspondances terminales

# FIG. 6

A20 — **CA**

A21 — Créer TR

k = 0

k ≡ k + 1

A22 — Lire $CG_k$ , $CP_k$

i = 0

i ≡ i + 1

A23 — Lire $g_i:p_i$

A24 — Lire $g_{i-1}:p_{i-1}$, $g_{i+1}:p_{i+1}$

A25 — Déduire et mémoriser $R_i$
$g_i:p_i => g_{i-1}:p_{i-1}\_g_{i+1}:p_{i+1}$

A26 — $i \geq l_k$ ? — non

oui

A27 — $k \geq K$ ? — non

oui

A28 — Réduire R dans TR

# FIG. 7

A40 — **TR**

A41 — Créer TE

$r = 1, q = 1$

A42 — $Et_q \equiv g_{r-1}{:}p_{r-1}\_g_r{:}p_r$

A43 — $Et_q$ existe dans TE ?  — non → Mémoriser $Et_q$ dans TE — A44

oui

$q \equiv q + 1$

A45 — $Et_q \equiv g_r{:}p_r\_g_{r+1}{:}p_{r+1}$

A46 — $Et_q$ existe dans TE ? — non → Mémoriser $Et_q$ dans TE — A47

oui

$q \equiv q + 1$

A48 — $r \geq R1$ ? — non → $p \equiv p + 1$

oui

A49 — Créer Etinit et Etfin

A50 , FIG.8

FIG. 8

A49 , FIG.7

A50 — TE

A51 — $u = 1$

A52 — $w = u + 1$

A53 — $g1_u:p1_u = <<:* \ ?$ — oui → lier Etinit à $Et_u$ — A54 — $u \equiv u + 1$

non

A55 — $g2_u:p2_u = >>:* \ ?$ — oui → lier $Et_u$ à Etfin — A56

non

A57 — $g2_u:p2_u = g1_w:p1_w \ ?$ — oui → lier $Et_u$ à $Et_w$
$T = g2_u:p2_u \Leftrightarrow g1_u:p1_{u\_}g2_w:p2_w$ — A58

non

A59 — $w \geq E \ ?$ — non → $w \equiv w + 1$

oui

A60 — $u \geq E \ ?$ — non → $u \equiv u + 1$

oui

FIN

# FIG. 9

P2

P20  | Pondérer $P(T_n) \; \forall \; n \in [1;N]$
$VT \equiv 0$

P21  | $CG_k$ :
déterminer $P(CG_k|CP_j) = \Pi \; P(T), \; \forall \; j \in [1;J]$

P22  | $CG_k$ :
$Ct_{max} \equiv max \; [P(CT_1), \; P(CT_j)]$

P23  | $VT \equiv VT + 1, \; \forall T \in CT_{max}$

P24  | Lecture C ?          oui          $k \equiv k + 1$

non

P25  | $P(T_n) = VT_n / \Sigma(VT)$

P26  | $P(T_n)$ converge ?          non          $k = 0$

oui

# FIG. 10

| | |
|---|---|
| P3 | Construire DSP |
| P4 | CPD ∈ DSP ⇔ CGD ∈ DG |
| P5 | Déterminer CPRQ, P(CGRQ\|CPRQ) |
| P6 | Rechercher CPRQ ∈ DSP<br>déduire CGA ∈ DG |
| P7 | Déterminer P(CGA\|CGRQ) |
| P8 | Classer CGA |

**Office européen des brevets**

## RAPPORT DE RECHERCHE EUROPEENNE

Numéro de la demande

EP 05 29 2593

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | YVES SCHYBES, EMMANUEL ROCHE: "Exact Generalization of Finite-state Tranductions: Application to Grapheme-to-Phoneme Transcription" mars 1995 (1995-03), TECHNICAL REPORT TR-95-08, MITSUBISHI ELECTRIC RESEARCH LABORATORIES, CAMBRIDE RESEARCH CENTER , CAMBRIDGE, MA , XP002331511 * page 1, ligne 1-3, alinéa 5 * * page 2, ligne 1-4; séquence 2 * * page 3, ligne 1-3 * * page 3, ligne 3,4, alinéa 6 * * page 3, alinéa 7 * ----- | 1-17 | G06F17/27 |
| A | CASEIRO D ET AL: "Grapheme-to-phone using finite-state transducers" SPEECH SYNTHESIS, 2002. PROCEEDINGS OF 2002 IEEE WORKSHOP ON 11-13 SEPT. 2002, PISCATAWAY, NJ, USA,IEEE, 11 septembre 2002 (2002-09-11), pages 215-218, XP010653649 ISBN: 0-7803-7395-2 * page 215, colonne de gauche, ligne 1,2 * * page 215, colonne de droite, ligne 12-15 * * page 217, colonne de gauche, ligne 1-9; séquence 3.1 * * page 217, colonne de gauche, ligne 5-10; séquence 3.2 * ----- -/-- | 1-17 | |

DOMAINES TECHNIQUES RECHERCHES (IPC)

G06F
G10L

Le présent rapport a été établi pour toutes les revendications

| Lieu de la recherche | Date d'achèvement de la recherche | Examinateur |
|---|---|---|
| Berlin | 31 janvier 2006 | Lopez, P |

EPO FORM 1503 03.82 (P04C02)

**Office européen des brevets**

**RAPPORT DE RECHERCHE EUROPEENNE**

Numéro de la demande

EP 05 29 2593

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | HAN SHU AND I LEE HETHERINGTON SPOKEN LANGUAGE SYSTEMS GROUP LABORATORY FOR COMPUTER SCIENCE MASSACHUSETTS INSTITUTE OF TECHNOLOGY: "EM TRAINING OF FINITE-STATE TRANSDUCERS AND ITS APPLICATION TO PRONUNCIATION MODELING" ICSLP 2002 : 7TH INTERNATIONAL CONFERENCE ON SPOKEN LANGUAGE PROCESSING. DENVER, COLORADO, SEPT. 16 - 20, 2002, INTERNATIONAL CONFERENCE ON SPOKEN LANGUAGE PROCESSING. (ICSLP), ADELAIDE : CAUSAL PRODUCTIONS, AU, vol. VOL. 4 OF 4, 16 septembre 2002 (2002-09-16), pages 1293-1296, XP007011545 ISBN: 1-876346-40-X * page 1293, colonne de droite, ligne 10-12; séquence 2.1 * * page 1294, colonne de droite, ligne 7,8; séquence 3 * * page 1294, colonne de droite, ligne 1-11, alinéa 3.1 * * page 1295, colonne de droite, ligne 1-6; séquence 5.1 * * page 1296, colonne de gauche, ligne 1-8; séquence 5.2 * ----- | 1-17 | |
| A | GOSSE BOUMA: "A finite state and data-oriented method for grapheme to phoneme conversion" mai 2000 (2000-05), PROCEEDINGS OF THE FIRST CONFERENCE ON NORTH AMERICAN CHAPTER OF THE ASSOCIATION FOR COMPUTATIONAL LINGUISTICS, PAGES: 303 - 310 , SEATTLE, WASHINGTON, USA , XP002331512 * page 303, colonne de gauche, ligne 23-27; séquence 1 * * page 303, colonne de droite, ligne 2-5 * ----- -/-- | 1-6 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Berlin | 31 janvier 2006 | Lopez, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................

& : membre de la même famille, document correspondant

EPO FORM 1503 03.82 (P04C02)

Office européen
des brevets

**RAPPORT DE RECHERCHE EUROPEENNE**

Numéro de la demande

EP 05 29 2593

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2004/093567 A1 (SCHABES YVES ET AL) 13 mai 2004 (2004-05-13) * page 1, colonne de gauche, ligne 1,2, alinéa 4 * * page 6, colonne de gauche, ligne 19-21, alinéa 71 * * page 6, colonne de droite, alinéa 83 * * page 7, colonne de gauche, ligne 4-10, alinéa 83 * * page 9, colonne de gauche, ligne 2-6, alinéa 101 * ----- | 13-15 | |
| A | US 6 393 444 B1 (LAWRENCE STEPHEN GRAHAM COPINGER) 21 mai 2002 (2002-05-21) * colonne 1, ligne 41 * * colonne 1, ligne 51-62 * * colonne 3, ligne 30-32 * * colonne 4, ligne 20-23 * * colonne 4, ligne 60-65 * ----- | 13-15 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Berlin | 31 janvier 2006 | Lopez, P |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 2593

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2006

| Document brevet cité au rapport de recherche | Date de publication | Membre(s) de la famille de brevet(s) | Date de publication |
|---|---|---|---|
| US 2004093567 A1 | 13-05-2004 | AU 4100399 A<br>CA 2333402 A1<br>EP 1145141 A2<br>US 6424983 B1<br>WO 9962000 A2 | 13-12-1999<br>02-12-1999<br>17-10-2001<br>23-07-2002<br>02-12-1999 |
| US 6393444 B1 | 21-05-2002 | GB 2343037 A | 26-04-2000 |

Pour tout renseignement concernant cette annexe : voir Journal Officiel de l'Office européen des brevets, No.12/82